Europäisches Patentamt

(19) European Patent Office

Office européen des brevets

(11) Publication number: **0 024 825**
**B1**

(12) **EUROPEAN PATENT SPECIFICATION**

(45) Date of publication of patent specification: **20.07.83**

(51) Int. Cl.³: **G 01 N 1/10**

(21) Application number: **80302615.2**

(22) Date of filing: **31.07.80**

(54) **A device for sampling liquid from near the bottom of a container and method of operating such a device.**

(30) Priority: **23.08.79 US 68995**

(43) Date of publication of application:
**11.03.81 Bulletin 81/10**

(45) Publication of the grant of the patent:
**20.07.83 Bulletin 83/29**

(84) Designated Contracting States:
**DE GB SE**

(56) References cited:
**DE - A - 2 109 789**
**US - A - 2 998 726**
**US - A - 3 531 995**

(73) Proprietor: **MOBIL OIL CORPORATION**
**150 East 42nd Street**
**New York New York 10017 (US)**

(72) Inventor: **Ueberschaer, Hubert Joachim**
**17 Andover Road**
**Hartsdale New York 10530 (US)**

(74) Representative: **West, Alan Harry**
**Mobil Court 3 Clements Inn**
**London WC2A 2EB (GB)**

Courier Press, Leamington Spa, England

A device for sampling liquid from near the bottom of a container
and method of operating such a device

Background of the invention

The present invention relates to a device for obtaining a sample of liquid from near the bottom of a liquid-filled container. More particularly, the invention relates to a device for obtaining a sample of water or water-oil emulsion from underneath the crude oil in the cargo tank of an oil tanker.

In many instances, cargo oil, e.g. crude or refined oil which is loaded onto tankers is contaminated with substantial amounts of water. If payment for the oil is based on the measured volume of total liquid in the cargo tanks, the final cost to a buyer may be higher than it should be because he pays for the useless water at cargo oil prices. In many actual cargo oil purchasing situations, the buyer is allowed to deduct the volume of water in the cargo tanks only if he can prove that it was pumped aboard with the cargo oil and was not already present in the tanks before the cargo oil was loaded.

Since water inadvertently left in the tanks (e.g. seawater used for ballast, etc.), will have a substantially different composition from the water loaded with the cargo oil (e.g. formation water produced with the crude or condensate from steam used in processing the produced oil), the origin of the water in question can readily be established if a sample of the water can be obtained from a cargo tank for analysis after it has been loaded.

Further, by knowing the origin of any water in a loaded cargo tank, steps can be taken to alleviate the contamination problem. That is, if the water is being pumped in with the cargo oil, further processing of the cargo oil can be undertaken to remove the water before loading or if the water is originally present in the tank, further steps can be taken aboard the ship to remove such water before loading.

Document US—A—3531995 discloses a water sampler including a cylinder having at one end an inlet port for the liquid to be sampled and at its opposite end a liquid outlet. A piston is slidably disposed within the cylinder and a piston is fixed to the piston and extends beyond said one end of the cylinder. The piston defines a spool valve for permitting liquid to flow into the cylinder through the inlet port but not in the reverse direction. A resilient element extends through the piston rod and is operable, when the device is at the desired depth for sampling, to urge the piston to the other end of the cylinder and thereby draw a sample of water into the cylinder.

Document US—A—2998726 discloses a liquid sampling device including an upright open ended housing which at its lower end defines a valve seat. A plug valve, which is normally arranged to be spaced from the valve seat, is shaped to fit in the seat and is carried by a tubular member which extends beyond the top end of the housing for connection to a raising and lowering strap. In operation, the device is lowered into a container from which a sample of liquid is to be taken with the plug valve and valve seat being maintained out of seating engagement by releasable latch means acting between the housing and the tubular member. When the device is at the required depth within the container the latch means is released so that the housing can move to a position in which the plug valve engages the valve seat to trap a sample of liquid within the housing.

According to one aspect of the invention there is provided a device for sampling liquid from near the bottom of a container, the device comprising:

(i) a cylinder having a top end and bottom end, and a liquid outlet adjacent to the top end,

(ii) a piston slidably disposed within the cylinder,

(iii) a piston rod fixed to the piston and extending beyond the top end of the cylinder,

(iv) at least one inlet port for the liquid to be sampled at the bottom end of the cylinder, and

(v) valve means for permitting liquid to flow into the cylinder through the inlet port but not in the reverse direction, characterised by

(vi) at least one liquid by-pass port in the piston and

(vii) valve means for permitting liquid to flow through the by-pass port in an upward direction but not in the reverse direction.

According to a further aspect of the invention, there is provided a method of sampling a liquid from near the bottom of a container using a sampling device including a cylinder which has a liquid outlet at its top end and which has a piston slidably disposed therein, the method comprising:

(i) lowering the device down through the container of liquid by means of a line attached to a piston rod fixed to the piston, whereby the piston is retained at the top of its stroke within the cylinder until the device reaches the desired sampling height in the container,

(ii) causing the piston to descend within the cylinder to the bottom of its stroke, characterised by

(iii) withdrawing the piston rod by means of the line whereby the piston is brought to the top of its stroke in the cylinder and the liquid to be sampled is drawn into the cylinder beneath the piston through an inlet port in the bottom end of the cylinder,

(iv) causing the piston to descend in the cylinder to the bottom of its stroke whereby the liquid drawn into the cylinder is transferred through at least one by-pass port to the portion of the cylinder above the piston and

(v) withdrawing the piston rod whereby the piston is brought to the top of its stroke in the cylinder and a liquid in the cylinder is expelled from the liquid outlet.

Preferably the method includes the step of initially withdrawing the piston rod whereby the piston is brought to the top of its stroke in the cylinder to draw a liquid into the cylinder, which liquid is expelled from the cylinder in step (ii). Conveniently, this further liquid is clean oil. Initial filling with clean oil may be desirable if the oil in the container is dirty or viscous in nature, the clean oil preventing passage of dirt through the valves in the sampling device and also being more readily displaced through the by-pass ports and expelled from the outlet than the more viscous cargo oil. Suitable types of oil for this initial filling step are lubricating oil, diesel oil and fuel oil.

In the accompanying drawings,

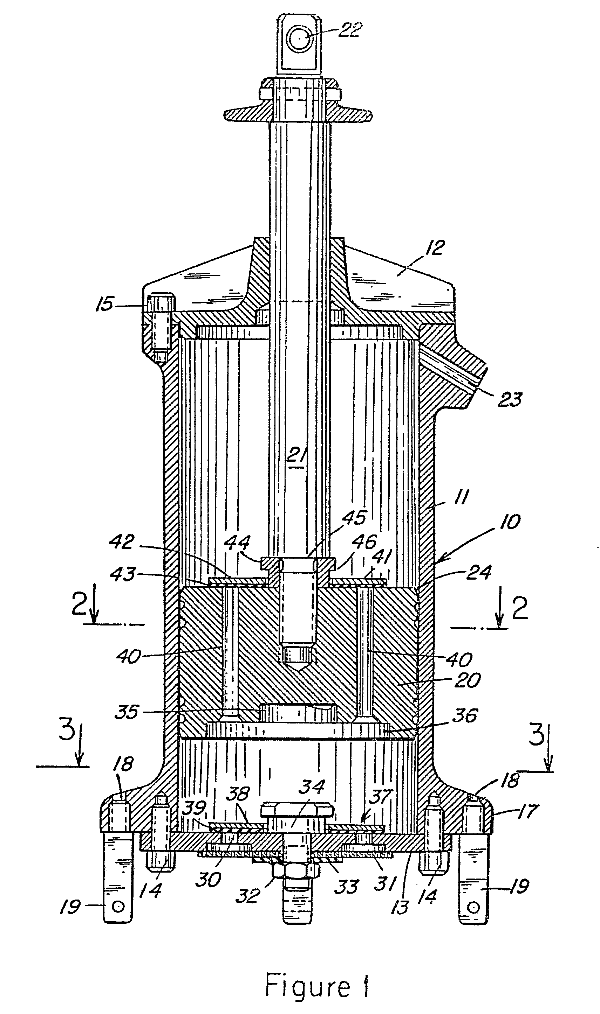

Figure 1 is an elevation in section of one form of the sampling device,

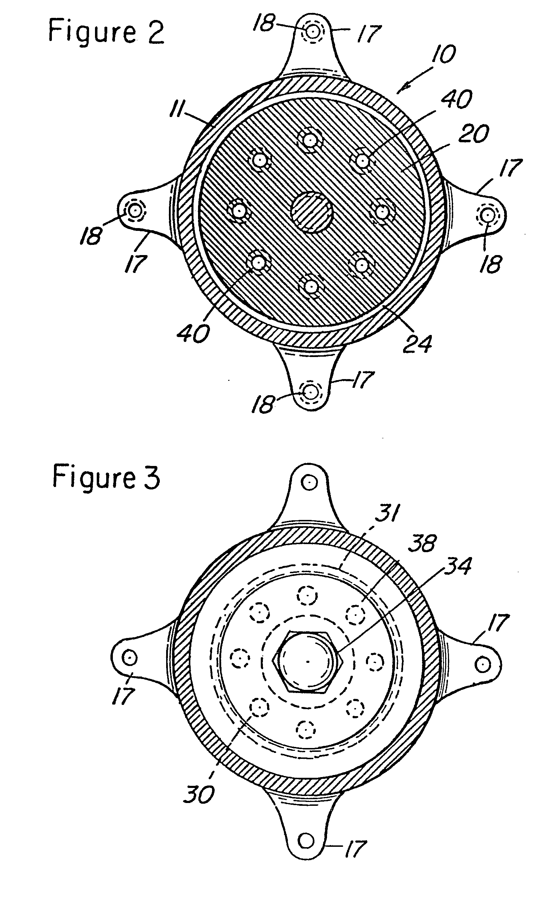

Figure 2 is a cross-section along the line 2—2' of Figure 1, and

Figure 3 is a cross-section along the line 3—3' of Figure 1.

Description of Preferred Embodiments

The device 10 comprises a cylindrical barrel 11 fitted with a top cover 12 and a bottom cover 13. The covers are held together by means of the bottom screws 14 and top screws 15. The cylinder barrel 11 and the top and bottom covers 12 and 13 are suitably made of brass while screws 14 and 15 are suitably of bronze or stainless steel in order to avoid corrosion from alternate contact with oil and salt water. Barrel 11 has a bottom flange 17 which has a number (4) of axial screw holes 18 around its periphery. Legs 19 are screwed to the screw holes 18 in the flange in order to regulate the height at which the device stands above the bottom of the liquid container.

A heavy brass piston 20 fits closely within cylinder barrel 11 so as to provide a sliding but substantially liquid-tight fit with the barrel. A piston rod 21, suitably of bronze, is screwed into the piston and extends through an aperture in top cover 12. An eye 22 for the lowering and raising line (not shown) is provided on the end of piston rod 21.

A liquid outlet spigot 23 is provided in the side of barrel 11 near top cover 12. In order to ensure that piston 20 can be drawn to the top of its stroke without trapping liquid above the top of the passageway in spigot 23, a relief 24 may be provided on the outer periphery of the upper surface of the piston.

The lower cover 13 has eight inlet ports 30 evenly spaced radially around its central axis. These ports are covered on the outside of cover 13 by a strainer 31 which is secured by a nut 32 and washer 33 on screwed boss 34 which extends through cover 13. Piston 20 has a central recess 35 in its lower surface to accommodate boss 34 when the piston is at the bottom of its stroke. Recess 35 has a more shallow radial extension 36 to accommodate inlet valve 37 which fits against the inner surface of bottom cover 13 to cover inlet ports 30. Valve 37 comprises a composite annular plate comprising a bronze disc 38 and neoprene disc 39 with the neoprene disc face downwards so as to provide a liquid-tight seal against bottom cover 13 when pressure is exerted on the top face of the valve plate from above. The plate is a freely sliding fit on the upper portion of boss 34 so that when valve 37 slides upwards on boss 34, liquid flow in an upward direction may take place through inlet ports 30.

Piston 20 has a number of axial by-pass ports 40 evenly spaced radially around its central axis. These ports provide liquid flow communication between the portion of the cylinder beneath the piston and the portion above the piston. These by-pass ports open onto the upper surface of piston 20 where there is a one-way plate valve 41 similar in construction to valve 37. Valve 41 is of composite construction, comprising an annular bronze upper disc 42 and a lower neoprene disc 43 which seals against the upper surface of piston 20 when liquid pressure is exerted on valve 41 from above. Valve 41 is a freely sliding fit on annular boss 44 which is secured to the upper face of piston 20 by means of a shoulder 45 on piston rod 21.

In use, the device is first filled with clean oil such as lubricating oil or fuel oil. This is done by lowering piston 20 in the cylinder 11 to the bottom of its stroke. The lower part of the device is then immersed in the clean oil which may be in a suitable container such as a bucket. Piston rod 21 is then withdrawn manually so as to raise piston 20 in cylinder 11. This draws the light oil into cylinder 11 through strainer 31 and inlet ports 30. One-way valve 37 acts to permit the flow of liquid in this direction by sliding axially up boss 34. When piston 20 is at the top of its stroke adjacent top cover 12 the cylinder will be full of the clean oil and the device may be removed from the bucket or other container. Escape of the oil from the cylinder is prevented by the action of valve 37: the liquid pressure on the top of the valve plate seals the valve firmly over the inlet ports 30 thereby retaining the oil within the cylinder.

The device is then lowered into the liquid-filled container from which the sample is to be taken. The lowering is carried out by means of a line such as a steel wire or chain attached to eye 22 in piston rod 21, so as to retain piston 20 at the top of its stroke in the cylinder. The lowering is continued until the legs 19 on the bottom of the device rest on the bottom of the liquid filled container. The tension on the line is then released so that piston 20 slides down cylinder barrel 11 under its own weight to which end, piston 20 is of relatively massive construction so as to be able to overcome the frictional and viscous forces which it encounters at this point. As piston 20 slides down cylinder 11 the light oil retained below the piston passes through by-pass ports 40 into the portion of the cylinder above the piston; the action of one-way valve 41 permits this flow to take place by sliding axially up boss 44 as far as permitted by retaining shoulder 46.

The liquid near the bottom of the container is then sampled by restoring tension on the line attached to piston rod 21 so as to draw piston 20 up cylinder barrel 11 until it reaches the top of its stroke, adjacent top cover 12. As the piston rises in the cylinder the light oil which was above the piston is expelled through spigot 23. At the same time, the liquid to be sampled is drawn into the cylinder through strainer 31 and inlet ports 30, as permitted by valve 37. When the piston reaches the top of its stroke the cylinder will be filled with the liquid to be sampled; further tension on the line will then draw the device up through the liquid-filled container to the place where the sample is to be collected. The sampled liquid is retained in the portion of the cylinder beneath the piston by means of one-way valve 37.

Finally, the sampled liquid is collected. To do this, the sampling device containing the sampled liquid is set down, e.g. on the deck of the tanker and piston 20 is lowered in the cylinder 11 under its own weight or by a downward force applied manually on piston rod 21. This action transfers the sampled liquid to the portion of the cylinder above the piston through by-pass ports 40, as permitted by the action of one-way valve 41. The sampled liquid may then be expelled from the device by raising piston 20 in cylinder 11; this may be done by pulling piston rod 21 upwards manually. The action of one-way valve 41 prevents the sampled liquid escaping through by-pass ports 40. The liquid expelled through spigot 23 may be collected in a suitable container, such as a collection bottle, for analysis.

The height above the bottom of the container at which the sample is taken may be varied by the use of legs 19 of different lengths. A set of legs of varying lengths may be supplied with each device so as to facilitate change of sampling depth. Other devices for achieving the same purpose may also be used, for example, an axially-slotted skirt secured to the bottom cover 13 by means of radial screws passing through the slots. Loosening the screws would permit the skirt to be moved axially with respect to the rest of the device and the position chosen would be retained when the screws were tightened again. The skirt would be provided with suitable apertures to permit the liquid to be sampled to obtain access to the inlet ports in the bottom cover. The axial slots could, if desired, be replaced by helical slots which would permit the sampling depth to be altered by a rotary movement of the skirt.

Rapid sinking of the device is ensured by its relatively massive construction. The mass of the device also helps to maintain it upright on the bottom of the container when the liquid to be sampled is drawn in by withdrawal of the piston. A relatively good sliding — but fluid tight — fit between the piston and the barrel is also helpful in this respect.

The plate valves described above may, if desired, be replaced by other suitable one-way valves, e.g. reed valves, flapper valves or ball check valves. The valves may, of course, be made of materials other than those specifically described; for example, ball valves may be made of steel balls with neoprene or polytetrafluoroethylene seals or the plate valves shown may be made entirely of plastic resins. Other variations will be apparent to those skilled in the art.

## Claims

1. A device for sampling liquid from near the bottom of a container, the device comprising:

(i) a cylinder having a top end and a bottom end, and a liquid outlet (23) adjacent the top end,

(ii) a piston slidably disposed within the cylinder,

(iii) a piston rod fixed to the piston and extending beyond the top end of the cylinder,

(iv) at least one inlet port (30) for the liquid to be sampled at the bottom end of the cylinder, and

(v) valve means (37) for permitting liquid to flow into the cylinder through the inlet port but not in the reverse direction, characterised by

(vi) at least one liquid by-pass port (40) in the piston (20) and

(vii) valve means (41) for permitting liquid to flow through the by-pass port (40) in an upward direction but not in the reverse direction.

2. A sampling device according to claim 1 which includes means (19) for supporting the device in an upright position at a predetermined height above the bottom of a container containing the liquid to be sampled.

3. A sampling device according to claim 1 which includes a strainer (31) positioned underneath the inlet port (30) to strain liquid entering the cylinder through the inlet port (30).

4. A sampling device according to claim 1 in which the valve means (37) comprises a plate (38, 39) which is vertically movable from a lower sealing position covering the inlet port (30) and an upper flow position which permits liquid flow into the cylinder through the inlet port (30).

5. A sampling device according to claim 1 in which the valve means (41) comprises a plate (42, 43) which is vertically movable from a lower sealing position covering the by-pass port (40) and an upper flow position which permits liquid flow through the by-pass port (40) in an upward direction.

6. A sampling device according to claim 4 in which the plate valve (38, 39) comprises a vertically movable disc (39) having a resilient sealing surface.

7. A sampling device according to claim 5 in which the plate valve (42, 43) comprises a vertically movable disc (43) having a resilient sealing surface.

8. A method of sampling a liquid from near the bottom of a container using a sampling device including a cylinder which has a liquid outlet at its top end and which has a piston slidably disposed therein, the method comprising:

(i) lowering the device down through the container of liquid by means of a line attached to a piston rod fixed to the piston, whereby the piston is retained at the top of its stroke within the cylinder until the device reaches the desired sampling height in the container,

(ii) causing the piston to descend within the cylinder to the bottom of its stroke, characterised by

(iii) withdrawing the piston rod (21) by means of the line whereby the piston (20) is brought to the top of its stroke in the cylinder (10) and the liquid to be sampled is drawn into the cylinder beneath the piston (20) through an inlet port (30) in the bottom end of the cylinder,

(iv) causing the piston (20) to descend in the cylinder to the bottom of its stroke whereby the liquid drawn into the cylinder is transferred through at least one by-part port (40) to the portion of the cylinder above the piston (20) and

(v) withdrawing the piston rod (21) whereby the piston (20) is brought to the top of its stroke in the cylinder and the liquid in the cylinder is expelled from the liquid outlet (23).

9. A method according to claim 8 which includes the step of (vi) initially withdrawing the piston rod whereby the piston is brought to the top of its stroke in the cylinder to draw a liquid into the cylinder which liquid is expelled from the cylinder in step (iii).

10. A method according to claim 8 in which the liquid to be sampled comprises water underlying oil within the cargo tank of an oil tanker.

**Patentansprüche**

1. Einrichtung zur Entnahme von Flüssigkeitsproben aus der Nähe des Bodens eines Behälters, mit den folgenden Merkmalen:

(i) ein Zylinder mit einem oberen und einem unteren Ende sowie einem Flüssigkeitsauslaß (23) nahe dem oberen Ende,

(ii) ein Kolben, der verschieblich im Inneren des Zylinders angeordnet ist,

(iii) eine Kolbenstange, die am Kolben befestigt ist und sich bis über das obere Ende des Zylinders hinaus erstreckt,

(iv) mindestens eine Einlaßöffnung (30) für die Flüssigkeitsprobe am Bodenende des Zylinders, und

(v) eine Ventileinrichtung (37), um es Flüssigkeit zu gestatten, in den Zylinder durch die Einlaßöffnung zu strömen, aber nicht in Rückwärtsrichtung, gekennzeichnet durch die folgenden Merkmale:

(vi) mindestens eine Flüssigkeit-Beipaßöffnung (40) im Kolben (20), und

(vii) eine Ventileinrichtung (41), um es Flüssigkeit zu gestatten, durch die Beipaßöffnung (40) in einer Richtung nach oben zu strömen, aber nicht in Rückwärtsrichtung.

2. Probenentnahmeeinrichtung nach Anspruch 1, gekennzeichnet durch eine Einrichtung (19) zum Tragen der Einrichtung in aufrechter Lage in einer bestimmten Höhe oberhalb des Bodens eines Behälters, der die zur Probe zu entnehmende Flüssigkeit enthält.

3. Probenentnahmeeinrichtung nach Anspruch 1, gekennzeichnet durch ein Sieb (31), das unter der Einlaßöffnung (30) angeordnet ist, um die Flüssigkeit zu sieben, die in den Zylinder durch die Einlaßöffnung (30) eintritt.

4. Probenentnahmeeinrichtung nach Anspruch 1, dadurch gekennzeichnet, daß die Ventileinrichtung (37) eine Platte (38, 39) umfaßt, welche vertikal aus einer unteren Dichtungsposition, in welcher sie die Einlaßöffnung (30) abdeckt, in eine obere Strömungsposition beweglich ist, welche die Flüssigkeitsströmung durch den Zylinder in die Einlaßöffnung (30) gestattet.

5. Probenentnahmeeinrichtung nach Anspruch 1, dadurch gekennzeichnet, daß die Ventileinrichtung (41) eine Platte (42, 43) umfaßt, welche vertikal aus einer unteren Dichtungsposition, in welcher sie die Beipaßöffnung (40) abdeckt, in eine obere Strömungsposition beweglich ist, welche die Flüssigkeitsströmung durch die Beipaßöffnung (40) in eine Richtung nach oben gestattet.

6. Probenentnahmeeinrichtung nach Anspruch 4, dadurch gekennzeichnet, daß das Plattenventil (38, 39) eine vertikal bewegliche Scheibe (39) umfaßt, die eine federnde Dichtfläche aufweist.

7. Probenentnahmeeinrichtung nach Anspruch 5, dadurch gekennzeichnet, daß das Plattenventil (42, 43) eine vertikal bewegliche Scheibe (43) umfaßt, die eine federnde Dichtfläche aufweist.

8. Verfahren zur Entnahme von Flüssigkeitsproben aus der Nähe des Bodens eines Behälters, unter Verwendung einer Probenentnahmeeinrichtung, die einen Zylinder aufweist, der einen Flüssigkeitsauslaß an seinem oberen Ende hat, und in welchem ein Kolben verschieblich angeordnet ist, mit den folgenden Schritten:

(i) man senkt die Einrichtung durch den Flüssigkeitsbehälter mittels einer Leine ab, die an einer am Kolben befestigten Kolbenstange angebracht ist, wobei der Kolben an der Oberseite seines Hubes im Inneren des Zylinders gehalten wird, bis die Einrichtung die gewünschte Probenentnahmehöhe im Behälter erreicht hat,

(ii) man veranlaßt den Kolben, im Inneren des Zylinders bis auf die Unterseite seines Hubes abzusinken, gekennzeichnet durch die folgenden Schritte:

(iii) man zieht die Kolbenstange (21) mittels der Leine zurück, wobei der Kolben (20) zur Oberseite seines Hubes im Zylinder (10) gebracht wird und die Flüssigkeitsprobe in den Zylinder unter den Kolben (20) durch eine Einlaßöffnung (30) im Bodenende des Zylinders eingesaugt wird,

(iv) man veranlaßt den Kolben (20), im Zylinder bis zur Unterseite seines Hubes abzusinken, wobei die in den Zylinder gesaugte Flüssigkeit durch mindestens eine Beipaßöffnung (40) zu jenem Abschnitt des Zylinders oberhalb des Kolbens (20) übertragen wird, und

(v) man zieht die Kolbenstange (21) zurück, wobei der Kolben (20) zur Oberseite seines Hubes im Zylinder gebracht wird und die Flüssigkeit im Zylinder von dem Flüssigkeitsauslaß (23) ausgestoßen wird.

9. Verfahren nach Anspruch 8, gekennzeichnet durch den folgenden Schritt:

(vi) man zieht anfangs die Kolbenstange zurück, wobei der Kolben zur Oberseite seines Hubes im Zylinder gebracht wird, um eine Flüssigkeit in den Zylinder einzusaugen, welche dann aus dem Zylinder während des Schrittes (iii) ausgestoßen wird.

10. Verfahren nach Anspruch 8, dadurch gekennzeichnet, daß die Flüssigkeitsprobe Wasser enthält, das unter dem Öl im Inneren des Frachttanks eines Öltankers steht.

**Revendications**

1. Dispositif d'échantillonnage d'un liquide à un emplacement proche du fond d'un récipient, le dispositif comprenant:

(i) un cylindre ayant une extrémité supérieure et une extrémité inférieure, et une sortie de liquide (23) adjacente à l'extrémité supérieure,

(ii) un piston disposé dans le cylindre afin qu'il y coulisse,

(iii) une tige fixée au piston et dépassant de l'extrémité supérieure du cylindre,

(iv) au moins un orifice d'entrée (30) de liquide à échantillonner à l'extrémité inférieure du cylindre, et

(v) un clapet (37) destiné à permettre l'introduction du liquide dans le cylindre par l'orifice d'entrée mais non en sens inverse, caractérisé par:

(vi) au moins un orifice de dérivation de liquide (40) formé dans le piston (40) et

(vii) un clapet (41) destiné à permettre la circulation du liquide par l'orifice de dérivation (40) vers le haut mais non en sens inverse.

2. Dispositif d'échantillonnage selon la revendication 1, caractérisé en ce qu'il comprend un dispositif (19) de support du dispositif en position verticale à une hauteur prédéterminée au-dessus du fond d'un récipient contenant le liquide à échantillonner.

3. Dispositif d'échantillonnage selon la revendication 1, caractérisé en ce qu'il comprend un filtre (31) placé sous l'orifice d'entrée (30) et destiné à filtrer le liquide qui pénètre dans le cylindre par l'orifice d'entrée (30).

4. Dispositif d'échantillonnage selon la revendication 1, caractérisé en ce que le clapet (37) comporte une plaque (38, 39) qui est mobile verticalement entre une position inférieure de fermeture étanche dans laquelle elle recouvre l'orifice d'entrée (30) et une position supérieure de circulation qui permet la circulation du liquide vers l'intérieur du cylindre par l'orifice d'entrée (30).

5. Dispositif d'échantillonnage selon la revendication 1, caractérisé en ce que le clapet (41) comporte une plaque (42, 43) mobile verticalement entre une position inférieure de fermeture étanche dans laquelle elle recouvre l'orifice de dérivation (40) et une position supérieure qui permet la circulation du liquide par l'orifice de dérivation (40) vers le haut.

6. Dispositif d'échantillonnage selon la revendication 4, caractérisé en ce que le clapet en forme de plaque (38, 39) est un disque (39) mobile verticalement et ayant une surface élastique de fermeture étanche.

7. Dispositif d'échantillonnage selon la revendication 5, caractérisé en ce que le clapet en forme de plaque (42, 43) est un disque mobile verticalement (43) et ayant une surface élastique d'étanchéité.

8. Procédé d'échantillonnage d'un liquide à proximité du fond d'un récipient, à l'aide d'un dispositif d'échantillonnage qui comporte un cylindre qui a une sortie de liquide à son extrémité supérieure et qui contient un piston qui peut y coulisser, le procédé comprenant:

(i) la descente du dispositif dans le récipient de liquide à l'aide d'une ligne fixée à une tige elle-même fixée au piston, si bien que le piston est retenu à la partie supérieure de sa course à l'intérieur du cylindre jusqu'à ce que le dispositif atteigne la hauteur voulue d'échantillonnage dans le récipient,

(ii) la descente du piston dans le cylindre vers la partie inférieure de sa course, caractérisé par:

(iii) l'extraction de la tige de piston (21) à l'aide de la ligne de manière que le piston (20) soit mis à la partie supérieure de sa course dans le cylindre (10) et que le liquide à échantillonner soit aspiré à l'intérieur du cylindre au-dessus du piston (20) par l'intermédiaire d'un orifice d'entrée (30) formé à l'extrémité inférieure du cylindre,

(iv) la descente du piston (20) dans le cylindre, vers la partie inférieure de sa course, de manière que le liquide aspiré dans le cylindre soit transféré par au moins un orifice de dérivation (40) vers la partie du cylindre délimité au-dessus du piston (20), et

(v) l'extraction de la tige du piston (21) de manière que le piston (20) soit mis à la partie supérieure de sa course dans le cylindre et que le liquide présent dans le cylindre soit chassé par la sortie de liquide (23).

9. Procédé selon la revendication 8, caractérisé en ce qu'il comprend l'étape (vi) d'extraction initiale de la tige du piston de manière que le piston soit mis à la partie supérieure de sa course dans le cylindre et qu'il aspire un liquide dans le cylindre, ce liquide étant chassé du cylindre dans l'étape (iii).

10. Procédé selon la revendication 8, caractérisé en ce que le liquide à échantillonner est de l'eau disposée au-dessous de pétrole dans le réservoir de transport d'un pétrolier.

Figure 1

# Figure 2

# Figure 3